# EUROPÄISCHE PATENTSCHRIFT

(11) **EP 2 544 934 B1**
(45) Veröffentlichungstag und Bekanntmachung des Hinweises auf die Patenterteilung: **30.05.2018**
(21) Anmeldenummer: 11708033.3
(22) Anmeldetag: 10.03.2011
(51) Int. Cl.: B60T 17/22

(54) **MESSEINRICHTUNG ZUR DURCHFÜHRUNG EINES BREMSENTESTS BEI EINEM SCHIENENFAHRZEUG**
MEASUREMENT DEVICE FOR CARRYING OUT A BRAKE TEST IN A RAIL VEHICLE
SYSTÈME DE MESURE POUR EFFECTUER UN ESSAI DE FREINAGE AVEC UN VÉHICULE FERROVIAIRE

(30) Priorität: 12.03.2010 DE 102010011352
(43) Veröffentlichungstag der Anmeldung: 16.01.2013
(73) Patentinhaber: KNORR-BREMSE Systeme für Schienenfahrzeuge GmbH, 80809 München (DE)
(72) Erfinder: KOCH, Jörg, 80999 München (DE); OSBAHR, Sven, 85356 Freising (DE); HERDEN, Marc-Oliver, 81377 München (DE)
(74) Vertreter: Schönmann, Kurt
(86) Internationale Anmeldenummer: PCT/EP2011/053636
(87) Internationale Veröffentlichungsnummer: WO 2011/110638

(56) Entgegenhaltungen:
- US-A1- 2006 074 581
- US-A1- 2007 247 000
- US-B1- 6 227 625

## Beschreibung

Die vorliegende Erfindung betrifft eine mobile Messeinrichtung zur Durchführung eines Bremsentests gemäß dem, aus US 2007/0247000 A bekannten Oberbegriff des Anspruchs 1. Weiterhin umfasst die Erfindung auch ein Schienenfahrzeug, an das eine solche mobile Messeinrichtung angeschlossen ist.
Gemäß geltender Vorschriften des Internationalen Eisenbahnverbandes (UIC), der BoStrab sowie der Association of American Rail Roads (AAR) sind mit jeweils regionaler Ausprägung spezielle Bremsentests für eine pneumatische Bremsanlage der hier interessierenden Art vorgeschrieben, um die korrekte Bremsenfunktion eines Schienenfahrzeuges zu diagnostizieren. Auf Basis der durch den Bremsentest gewonnenen Messwerte kann der Funktionszustand einer pneumatischen Bremsanlage kontrolliert werden. Hierdurch lässt sich die Sicherheit der Bremsanlage gewährleisten und es kann ggf. eine Wartung eingeleitet werden. Durch Analyse der gewonnenen Messergebnisse lässt sich dabei auch auf das zu wartende Druckluftgerät, beispielsweise dasBremssteuergerät, und dessen Fehler rückschliessen. Um vergleichbare Messresultate zu erzielen sind die Bremsentests gewöhnlich hinsichtlich der zu gewinnenden Messwerte, der Prüfdrücke und anderer Parameter genormt.

Aus dem allgemeinen Stand der Technik geht eine Messeinrichtung hervor, welche für den mobilen Einsatz bestimmt ist, um die Messeinrichtung in einfacher Weise zu dem zu prüfenden Schienenfahrzeug transportieren zu können. Dabei ist die Messeinrichtung auf einem Fahrwagen oder in einem mobilen Tragegerär aufgebaut, der neben einen nach Art eines PC ausgebildeten Rechners mit Tastatur und Bildschirm als Eingabe bzw. Anzeigemittel auch die erforderlichen Messschnittstellen zum Anschluss der Drucksensoren und dergleichen aufweist.

Allerdings ist die Mobilität einer solchen Messeinrichtung beschränkt, da der Wagenaufbau recht sperrig ausfällt und insbesondere der Einsatz dieser mobilen Messeinrichtung außerhalb der Werkstatt daher nicht möglich ist. Daneben sind zwar mobile Messeinrichtungen zur Durchführung eines Bremsentests bekannt, welche in einem tragbaren Koffer untergebracht sind. Allerdings sind die recht schweren Messkomponenten beidseits der beiden Schalen eines solchen Koffers integriert und beanspruchen die Kofferscharniere so stark, dass diese mittelfristig gewöhnlich ausreißen, so dass diese bekannte mobile Lösung wenig praxistauglich ist und insbesondere nicht für den rauhen Einsatz im Freien bei extremen Temperaturschwankungen geeignet ist.

Es ist daher die Aufgabe der vorliegenden Erfindung eine mobile Messeinrichtung zur Durchführung eines Bremsentests zu schaffen, die sich durch eine hohe mechanische Stabilität bei gleichzeitig hohem Mobilitätsgrad auszeichnet.

Die Aufgabe wird ausgehend von einer mobilen Messeinrichtung gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre, dass die Eingabemittel und die Anzeigemittel für die elektronische Messeinheit getrennt hiervon, nämlich in einem separaten tragbaren Steuerendgerät angeordnet sind, das die Funktion einer Fernbedienung sowie einer abspeicherbaren Messergebnisausgabe ausführt, wobei die elektronische Messeinheit und das separate Steuerendgerät über eine je zugeordnete Funkschnittstelle bidirektional miteinander kommunizieren. Alternativ hierzu ist es auch denkbar, dass das Steuerendgerät über ein Kabel mit der Messeinheit kommuniziert.

Der Vorteil der Lösung ist die Abnehmbarkeit des Steuerendgeräts. Somit kann die Messeinrichtung nahe am Wagen und damit am Messobjekt gehalten werden, und zwar mit kurzen pneumatischen Leitungen oder kurzen Sensorverkabelungen, um Störgrößen zu vermeiden, während sich der Operator entweder im "Warmen im Auto" oder zentral im nächsten Gebäude aufhalten kann. Prinzipiell kann als Steuerendgerät ein PC, ein Laptop, ein PDA oder ein Smartphone verwendet werden.
Der Vorteil der erfindungsgemäßen Lösung liegt also darin, dass ein Bremsentest unabhängig vom Standort der Sensorsignale empfangenden elektronischen Messeinheit durchgeführt werden kann. Die drahtlose Kommunikation über das tragbare Steuerendgerät ermöglicht es dem Bediener, einen Bremsentest auszulösen und während dessen Laufs gleichzeitig eine Sichtprüfung der Aktivität der Bremszylinder und dergleichen durchzuführen. Hierdurch wird ein höherer Grad an Sicherheit eines Bremsentests ermöglicht. Darüber hinaus lässt sich über das tragbare Steuerendgerät ein geeigneter Testmodus auswählen, der anhand vorprogrammierter Fahrzeugtypen über ein einfaches Auswahlmenü exakt auf den Testgegenstand abgestimmt werden kann, ohne dass Eingabefehler hierdurch entstehen können. Dabei sind die testwesentlichen Parameter des Schienenfahrzeuges bereits im Steuerendgerät hinterlegt. Durch die getrennte Ausbildung des Steuerendgeräts, dass die Eingabemittel und Anzeigemittel der mobilen Messeinrichtung umfasst, lässt sich die elektronische Messeinheit, die in erster Linie zum Empfangen und Verarbeiten der Sensorsignale dient, kompaktbauernder ausführen und vorzugsweise in ein Gehäuse in Form eines Rollkoffers unterbringen. Ein solches Rollkoffergehäuse ist insbesondere für den Außeneinsatz geeignet und verleiht der elektronischen Messeinheit einen hinreichenden Grad an Mobilität.
Vorzugsweise sollte das tragbare Steuerendgerät nach Art eines sogenannten Personal Digital Assistant (PDA) ausgebildet sein. Denn diese Hardware steht als Massenartikel zur Verfügung und die erfindungsgemäßen Steuerfunktionen lassen sich per Software hierin in einfacher Weise implementieren. Zur drahtlos bidirektionalen Kommunikation mit der elektronischen Messeinheit sollte der PDA mit einer Wireless LAN (WLAN-Schnittstelle) ausgestattet sein. Somit kann für die Funkschnittstelle ebenfalls auf einen Massenartikel zurückgegriffen werden, so dass sich die erfindungsgemäße mobile Messeinrichtung in technisch einfacher Weise realisieren lässt.
Das vorzugsweise so ausgebildete tragbare Steuerendgerät sollte in Richtung der elektronischen Messeinheit lediglich die Steuerbefehle zur Ausführung eines Bremsentests durch die Messeinheit selbst übertragen. Dies bedeutet, dass der Bremsentest auf der elektronischen Messeinheit läuft und auch die Messdatenauswertung innerhalb der elektronischen Messeinheit durchgeführt werden sollte. Das tragbare Steuerendgerät empfängt von der elektronischen Messeinheit insoweit vorzugsweise lediglich die gewonnenen Messergebnisse, die zur Anzeige auf dem Steuerendgerät gebracht werden können oder auch hierauf abgespeichert werden können, um die Messergebnisse später auf andere Weise weiter zu verarbeiten, zu archivieren oder auszudrucken. Vorzugsweise können neben den Druckwerten auch andere bremsenspezifische Messwerte der Messwertverarbeitung zugeführt werden. Welche Messwerte erfasst und verarbeitet werden, hängt von dem auszuführenden Bremsentest ab, welcher - wie eingangs erläutert - entsprechend der geltenden Vorschriften durchzuführen ist.

Die ortsnah des Schienenfahrzeuges zu platzierende mobile elektronische Messeinheit umfasst vorzugsweise einen softwaregesteuerte Mikroprozessor, auf welchem eine Messwertauswertung zur Umsetzung des Bremsentests abläuft. Daneben sollte die mobile elektronische Messeinheit auch einen Akkumulator zur autaken Betriebsspannungsversorgung umfassen. Daneben oder stattdessen ist es jedoch auch denkbar, die Betriebsspannungsversorgung per elektrische Anschlussleitung sicherzustellen, falls der Einsatzort der erfindungsgegenständlichen mobilen Messeinrichtung dies zulässt.
Gemäß einer anderen die Erfindung verbessernden Maßnahme wird vorgeschlagen, dass die mobile elektronische Messeinheit mit einer original eigentlich für ein Schienenfahrzeug vorgesehenen elektronischen Bremsdrucksteuerung ausgestattet ist, an welcher die Steuerventile des Schienenfahrzeugs zwecks Durchführung des Bremsentests angeschlossen sind. Die Verwendung der originalen elektronischen Bremsdrucksteuerung lässt realitätsnahe Testergebnisse zu, da diese per se für Einsatzbedingungen im Temperaturbereich von gewöhnlich circa -30°C bis 70°C ausgelegt ist, so dass auch die erfindungsgemäße Messeinrichtung entsprechend robust ist.

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine schematische Seitenansicht eines Schienenfahrzeuges, bestehend aus mehreren einzelnen Wagen,
- Figur 2: eine schematische Blockschaltbilddarstellung der elektronischen Messeinheit, und
- Figur 3: eine schematische Blockschaltbilddarstellung eines tragbaren Steuerendgeräts.

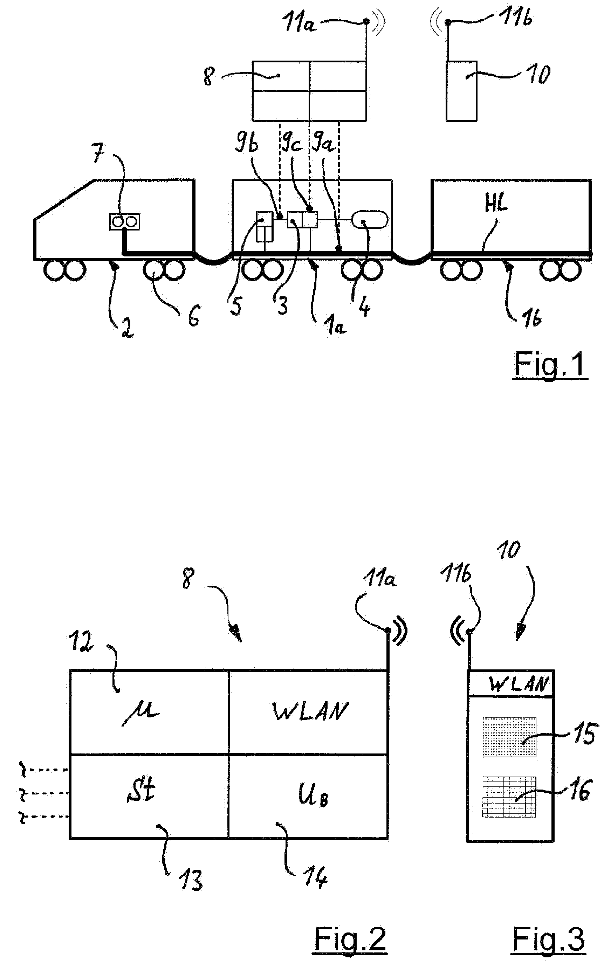

Gemäß Figur 1 besteht das Schienenfahrzeug aus mehreren Wagen 1a bis 1b, welche von einem vorangestellten Triebfahrzeug 2 gezogen werden. Ausgehend von Triebfahrzeug 2 ist eine Hauptluftleitung HL von Wagen 1a bis 1b durchgeschleift, welche in erster Linie der Ansteuerung einer pneumatischen Bremsanlage dient.

Die pneumatische Bremsanlage umfasst ein mit der Hauptluftleitung HL verbundenes Steuerventil 3 pro Wagen 1a (exemplarisch), welches ausgehend von einem in einem Behälter 4 bevorrateten Speisedruck den Bremsdruck für einen ebenfalls angeschlossenen Bremszylinder 5 schaltet. Über den Bremszylinder 5 lassen sich die Räder 6 des Wagens 1a in an sich bekannter Weise bremsen. Der Speisedruck für die pneumatische Bremsanlage wird von einer im Triebfahrzeug 2 angeordneten Druckluftquelle 7 in Form eines Kompressors bereitgestellt.

Die pneumatische Bremsanlage ist an einer ortnah hierzu aufgestellten mobilen elektronischen Messeinheit 8 angeschlossen, welche in einem Gehäuse untergebracht ist, das als Rollkoffer den mobilen Einsatz ermöglicht. Von der mobilen elektronischen Messeinheit 8 aus, erfolgt der Anschluss mehrerer Drucksensoren 9a bis 9c. Die über die Drucksensoren 9a bis 9c gewonnenen Messwerte werden innerhalb der mobilen elektronischen Messeinheit 8 signalverarbeitet, wobei allerdings die Eingabemittel und die Anzeigemittel für die elektronische Messeinheit 8 getrennt hiervon, nämlich in einem tragbaren Steuerendgerät 10 angeordnet sind, welches in erster Linie als Fernbedienung sowie zur abspeicherbaren Messergebnisausgabe dient und mit der elektronischen Messeinheit 8 über eine je zugeordnete Funkschnittstelle 11a bzw. 11b bidirektional kommuniziert.

Von den Drucksensoren 9a bis 9c misst ein erster Drucksensor 9a den Druck in der Hauptluftleitung HL des Schienenfahrzeuges. Mindestens ein zweiter Drucksensor 9b dient der Druckmessung des zugeordneten Bremsdrucks und ein hier exemplarisch veranschaulichter weiterer Drucksensor 9c ist zur Erfassung eines beliebigen Steuerdrucks im Bereich des Steuerventils 3 vorgesehen.

Gemäß Figur 2 umfasst die mobile elektronische Messeinheit 8 einen softwaregesteuerten Mikroprozessor 12, in welchem in erster Linie die Messwertauswertung zur Umsetzung des Bremsentests abläuft. Daneben ist die mobile elektronische Messeinheit 8 mit einer Bremsdrucksteuerung 13 ausgestattet, die hier in Form eines originalen Bremsdrucksteuermoduls in die elektronische Messeinheit 8 integriert ist und die Steuerventile 3 des Schienenfahrzeuges ansteuert.

Ferner umfasst die elektronische Messeinheit auch einen Akumulator 14 zur autaken Betriebsspannungsversorgung, so dass ein Stromanschlusskabel zur Durchführung von Bremsentests vermieden werden kann.

Über die integrierte Funkschnittstelle 11a, die als Wireless LAN-Schnittstelle ausgebildet ist, erfolgt die Kommunikation mit dem tragbaren Steuerendgerät 10, das als PDA ausgebildet ist. Das tragbare Steuerendgerät 10 übermittelt in Richtung der elektronischen Messeinheit 8 Steuerbefehle zur Ausführung eines Bremsentests durch die elektronische Messeinheit 8 und empfängt hiervon die durch den Bremsentest gewonnenen Messergebnisse zur Anzeige oder zur Abspeicherung. Dabei kann eine Anzeige der Messergebnisse über ein graphisches Display 15 erfolgen, wogegen die Eingabe hier über eine integrierte Tastatur 16 unterhalb der Anzeige 15 durchgeführt werden kann.

Die Erfindung ist nicht beschränkt auf das vorstehend beschriebene bevorzugte Ausführungsbeispiel. Es sind vielmehr auch Abwandlungen hiervon denkbar, die vom Schutzbereich der nachfolgenden Ansprüche mit umfasst sind. So ist es beispielsweise auch möglich, anstelle des PDA ein anderes geeignetes mobiles Steuerendgerät zu benutzen, sofern dieses mit einer Funkschnittstelle sowie geeigneten Eingabe- und Anzeigemitteln ausgestattet ist. Anstelle der Unterbringung der mobilen elektronischen Messeinheit in einem nach Art eines Rollkoffers ausgebildeten Gehäuses ist es auch denkbar, hierfür einen tragbaren Koffer oder dergleichen zu verwenden, sofern sich diese mobile Einheit vorzugsweise von einer Person transportieren lässt, um den erfindungsgemäßen Vorteil eines hohen Mobilitätsgrades zu erfüllen.

Unter dem Begriff Funkschnittstelle fallen bei der vorliegenden Anmeldung auch Technologien, wie beispielsweise WiFi, Bluetooth oder NFC. Die komplette Steuerung und Auswertung kann auch alleine im tragbaren Steuerendgerät ablaufen, beispielsweise für den Fall, dass reine Funksensoren und -aktoren eingesetzt werden. Zusätzlich oder anstelle der Druckmessung kann auch eine Kraftmessung erfolgen. Mittels der Kraftmeßdose können dabei die aktuellen Bremskräfte während des Bremsentests gemessen und ausgewertet werden. Die Kraftmeßdosen werden insoweit anstelle des Bremsbelags eingesetzt.

### Bezugszeichenliste

- 1: Wagen
- 2: Triebfahrzeug
- 3: Steuerventil
- 4: Druckluftbehälter
- 5: Bremszylinder
- 6: Räder
- 7: Kompressor
- 8: elektronische Messeinheit
- 9: Sensor
- 10: tragbares Steuerendgerät
- 11: Funkschnittstelle
- 12: Mikroprozessor
- 13: Bremsdrucksteuerung
- 14: Akumulator
- 15: Anzeige
- 16: Tastatur

## Patentansprüche

1. Mobile Messeinrichtung zur Durchführung eines Bremsentests bei einem Schienenfahrzeug mit druckmittelbetriebenen Bremsanlage, an welcher von außen her zugängliche Messanschlüsse für Drucksensoren (9a bis 9c) angebracht sind, deren elektrisches Messsignal eine hieran ortsnah angeschlossene, und zur mobilen Messeinrichtung gehörende mobile elektronische Messeinheit (8) signalverarbeitet, die mit zur mobilen Messeinrichtung gehörenden Eingabemitteln zur Bedienung und mit ebenso zur mobilen Messeinrichtung gehörenden Anzeigemitteln zum Benutzerdialog sowie zur Messergebnisanzeige verbunden ist, wobei die Eingabemittel und die Anzeigemittel für die elektronische Messeinheit (8) in einem hiervon getrennt angeordneten tragbaren Steuerendgerät (10) zur Fernbedienung sowie abspeicherbaren Messergebnisausgabe angeordnet sind, wobei ferner die elektronische Messeinheit (8) und das Steuerendgerät (10) über eine je zugeordnete Funkschnittstelle (11a; 11b) oder per Verbindungskabel bidirektional miteinander kommunizieren, **dadurch gekennzeichnet, dass** die Messanschlüsse dazu eingerichtet sind, die mobile Messeinrichtung mit folgenden Sensoren gleichzeitig zu verbinden: mindestens ein Drucksensor (9a) der den Druck in einer Hauptluftleitung (HL) erfasst, mindestens ein Drucksensor (9b) der einen zugeordneten Bremsdruck erfasst und mindestens ein weiterer Drucksensor (9c), der einen der Steuerdrücke eines Steuerventils (3) und/oder dessen Speisedruck entlang der Zeitachse erfasst, wobei die Drucksensoren (9a bis 9c) mehrere Bremsdrücke und/oder Steuerdrücke je zugeordneter Bremszylinder (5) bzw. deren Steuerventile (3) parallel erfassen können.

2. Mobile Messeinrichtung nach Anspruch 1,
**dadurch gekennzeichnet, dass** das tragbare Steuerendgerät (10) nach Art eines Personal Digital Assistant (PDA) mit Wireless LAN (WLAN) -Schnittstelle ausgebildet ist, dessen Steuerfunktion durch in Software hinterlegte Steuerungsbefehle änderbar hierin implementiert ist.

3. Mobile Messeinrichtung nach Anspruch 1 oder 2,
**dadurch gekennzeichnet, dass** das tragbare Steuerendgerät (10) in Richtung der elektronischen Messeinheit (8) Steuerbefehle zur Ausführung eines Bremsentests durch die elektronische Messeinheit (8) überträgt.

4. Mobile Messeinrichtung nach Anspruch 1 oder 2,
**dadurch gekennzeichnet, dass** das tragbare Steuerendgerät (10) von der elektronischen Messeinheit (8) die gewonnenen Messergebnisse zur Anzeige und/oder Abspeicherung empfängt.

5. Mobile Messeinrichtung nach einem der vorstehenden Ansprüche,
**dadurch gekennzeichnet, dass** die mobile elektronische Messeinheit (8) einen softwaregesteuerten Mikroprozessor (12) umfasst, auf welchem eine Messwertauswertung zur Umsetzung eines UIC- und/oder AAR Bremsentests abläuft.

6. Mobile Messeinrichtung nach einem der vorstehenden Ansprüche,
**dadurch gekennzeichnet, dass** die mobile elektronische Messeinheit (8) eine elektronische Bremsdrucksteuerung (13) eines Schienenfahrzeuges zum Anschluss der Steuerventile (3) hieran umfasst.

7. Mobile Messeinrichtung nach einem der vorstehenden Ansprüche,
**dadurch gekennzeichnet, dass** die mobile elektronische Messeinheit (8) einen Akkumulator (14) zur autarken Betriebsspannungsversorgung umfasst.

8. Mobile Messeinrichtung nach einem der vorstehenden Ansprüche,
**dadurch gekennzeichnet, dass** die mobile elektronische Messeinheit (8) ein Gehäuse in Form eines Rollkoffers aufweist.

9. Schienenfahrzeug mit mehreren Wagen (1a bis 1c), dessen Räder (6) über Bremszylinder (5) mit je zugeordneten Steuerventilen (3) nach Maßgabe des Steuerdrucks in einer Hauptluftleitung (HL) bremsbar sind, wobei zur Durchführung eines Bremsentests während des Stillstands des Schienenfahrzeuges eine mobile Messeinrichtung nach einem der vorstehenden Ansprüche anschließbar ist.

10. Schienenfahrzeug nach Anspruch 9,
**dadurch gekennzeichnet, dass** die pneumatische Bremsanlage für die Durchführung des Bremsentests an eine Druckluftquelle (7) angeschlossen ist.

## Claims

1. Mobile measurement device for carrying out a brake test on a rail vehicle having a pressure fluid-operated brake system to which measurement connections accessible from the outside for pressure sensors (9a to 9c) are fitted, the electrical measurement signal from said pressure sensors being subject to signal-processing by a mobile electronic measurement unit (8) which is connected to said sensors in the vicinity thereof and belongs to the mobile measurement device and which is connected to input means for operator control and to display means likewise belonging to the mobile measurement device for user dialogue and for displaying measurement results, wherein the input means and the display means for the electronic measurement unit (8) are arranged in a portable control terminal (10), which is separate from said electronic measurement unit, for remote control and also for outputting measurement results in a manner in which they can be stored, wherein the electronic measurement unit (8) and the control terminal (10) furthermore communicate with one another in a bidirectional manner by means of a respectively associated radio interface (11a; 11b) or by connection cables,
**characterised in that** the measurement connections are configured for connecting the mobile measurement device simultaneously to the following sensors:
at least one pressure sensor (9a) detecting the pressure in a main air line (HL), at least one pressure sensor (9b) detecting an associated brake pressure and at least one further pressure sensor (9c) detecting one of the control pressures of a control valve (3) and/or its feed pressure along the time axis, the pressure sensors (9a to 9c) being capable of detecting several brake pressures and/or control pressures per associated brake cylinder (5) or control valve (3) in parallel.

2. Mobile measurement device according to claim 1,
**characterised in that** the portable control terminal (10) is in the form of a personal digital assistant (PDA) with a wireless LAN (WLAN) interface, the control function of said portable control terminal being implemented therein in a variable manner by control commands which are stored in software.

3. Mobile measurement device according to claim 1 or 2,
**characterised in that** the portable control terminal (10) transmits control commands for the execution of a brake test by the electronic measurement unit (8) in the direction of the electronic measurement unit (8).

4. Mobile measurement device according to claim 1 or 2,
**characterised in that** the portable control terminal (10) receives the obtained measurement results for display and/or storage from the electronic measurement unit (8).

5. Mobile measurement device according to any of the preceding claims,
**characterised in that** the mobile electronic measurement unit (8) comprises a software-controlled microprocessor (12) on which a measurement evaluation for implementing a UIC and/or AAR brake test is run.

6. Mobile measurement device according to any of the preceding claims,
**characterised in that** the mobile electronic measurement unit (8) of a rail vehicle contains a brake pressure control means (13) for connecting the control valves (3).

7. Mobile measurement device according to any of the preceding claims,
**characterised in that** the mobile electronic measurement unit (8) comprises a battery (14) for the autonomous supply of operating voltage.

8. Mobile measurement device according to any of the preceding claims,
**characterised in that** the mobile electronic measurement unit (8) has a housing in the form of a wheeled case.

9. Rail vehicle having a plurality of carriages (1a to 1c), it being possible to brake the wheels (6) of said rail vehicle in accordance with the control pressure in a main air line (HL) by means of a brake cylinder (5) having associated control valves (3) in each case, wherein a mobile measurement device according to any of the preceding claims can be connected when the rail vehicle is stationary to carry out a brake test.

10. Rail vehicle according to claim 9,
**characterised in that** the pneumatic brake system is connected to a compressed-air source (7) for carrying out the brake test.

## Revendications

1. Dispositif mobile de mesure pour effectuer un test de freinage pour un véhicule sur rail ayant un système de freinage, qui fonctionne au moyen de la pression et sur lequel sont mis des raccords de mesure accessibles de l'extérieur pour des capteurs (9a à 9c) de pression, dont le signal électrique de mesure est traité par une unité (8) électronique de mesure mobile, qui y est raccordée en en étant proche localement, qui appartient au dispositif mobile de mesure et qui est reliée à des moyens d'entrée appartenant au dispositif mobile de mesure pour le traitement et à des moyens d'affichage, appartenant également au dispositif mobile de mesure, pour le dialogue avec l'utilisateur ainsi que pour l'affichage du résultat de la mesure, les moyens d'entrée et les moyens d'affichage, pour l'unité (8) électronique de mesure, étant disposés dans un terminal (10) de commande portatif, disposé en en étant séparé, pour le télétraitement ainsi que pour l'émission du résultat de la mesure pouvant être mémorisée, l'unité (8) électronique de mesure et le terminal (10) de commande communiquant, en outre, entre eux d'une manière bidirectionnelle par une interface (11a; 11b) radio associée ou par câble de liaison,
**caractérisé en ce que** les raccords de mesure sont conçus pour relier en même temps le dispositif mobile de mesure à des capteurs suivants :
au moins un capteur (9a) de pression, qui détecte la pression dans un conduit (HL) principal d'air, au moins un capteur (9b) de pression, qui détecte une pression de freinage associée et au moins un autre capteur (9c) de pression, qui détecte l'une des pressions de commande d'une vanne (3) pilote et/ou sa pression d'alimentation le long de l'axe du temps, les capteurs (9a à 9c) de pression pouvant détecter en parallèle plusieurs pressions de frein et/ou pressions de commande de chaque cylindre (5) de frein associé ou de leur vanne (3) pilote.

2. Dispositif mobile de mesure suivant la revendication 1,
**caractérisé en ce que** le terminal (10) portatif de commande est constitué à la manière d'un personal digital assistant (PDA), à interface LAN (WLAN) sans fil, dont la fonction de commande est mise en oeuvre de manière modifiable par des instructions de commande mémorisées dans du logiciel.

3. Dispositif mobile de mesure suivant la revendication 1 ou 2,
**caractérisé en ce que** le terminal (10) portatif de commande transmet, pour réaliser un test de freinage, par le dispositif (8) électronique de mesure, les instructions de commande en direction de l'unité (8) électronique de mesure.

4. Dispositif mobile de mesure suivant la revendication 1 ou 2,
**caractérisé en ce que** le terminal (10) portatif de commande reçoit, pour l'affichage et/ou la mémorisation, de l'unité (8) électronique de mesure, les résultats de mesure obtenus.

5. Dispositif mobile de mesure suivant l'une des revendications précédentes,
**caractérisé en ce que** l'unité (8) électronique de mesure mobile comprend un microprocesseur (12) commandé par logiciel, sur lequel se déroule une exploitation des valeurs de mesure pour la mise en oeuvre d'un test de freinage UIC et/ou AAR.

6. Dispositif mobile de mesure suivant l'une des revendications précédentes,
**caractérisé en ce que** l'unité (8) électronique de mesure mobile comprend une commande (13) électronique de pression de frein d'un véhicule ferroviaire pour le raccordement de la vanne (3) pilote.

7. Dispositif mobile de mesure suivant l'une des revendications précédentes,
**caractérisé en ce que** l'unité (8) électronique de mesure mobile comprend un accumulateur (14) pour l'alimentation indépendante en la tension de fonctionnement.

8. Dispositif mobile de mesure suivant l'une des revendications précédentes,
**caractérisé en ce que** l'unité (8) électronique de mesure mobile a une enveloppe sous la forme coffre à rouleau.

9. Véhicule ferroviaire ayant plusieurs voitures (1a à 1c), dont les roues (6) peuvent être freinées par des cylindres (5) de frein ayant chacun des vannes (3) pilotes associées, en fonction de la pression de commande dans un conduit (HL) d'air principal, dans lequel, pour effectuer un test de freinage pendant que le véhicule ferroviaire est à l'arrêt, un dispositif mobile de mesure suivant l'une des revendications précédentes peut être raccordé.

10. Véhicule ferroviaire suivant la revendication 9,
**caractérisé en ce que** le système de freinage pneumatique est, pour effectuer le test de freinage, raccordé à une source (7) d'air comprimé.
